# FASCICULE DE BREVET EUROPEEN

(11) **EP 2 517 391 B1**
(45) Date de publication et mention de la délivrance du brevet: **21.05.2014**
(21) Numéro de dépôt: 10800723.8
(22) Date de dépôt: 17.12.2010
(51) Int. Cl.: H04K 3/00, G01S 5/00

(54) **SYSTEME ET PROCEDE DE FORMATION D'UN FAISCEAU D'ONDES A PARTIR D'ANTENNES MOBILES LES UNES PAR RAPPORT AUX AUTRES**
SYSTEM UND VERFAHREN ZUR HERSTELLUNG EINES WELLENSTRAHLS AUS ZUEINANDER BEWEGLICHEN ANTENNEN
SYSTEM AND METHOD FOR FORMING A WAVE BEAM FROM ANTENNAS MOVABLE RELATIVE TO EACH OTHER

(30) Priorité: 23.12.2009 FR 0906268
(43) Date de publication de la demande: 31.10.2012
(73) Titulaire: Thales, 92200 Neuilly Sur Seine (FR)
(72) Inventeur: DEFRANCE, Louis, F-91370 Verrieres Le Buisson (FR); GERFAULT, Bertrand, F-49450FR St Macaire En Mauges (FR)
(74) Mandataire: Labatte, Laurent
(86) Numéro de dépôt international: PCT/EP2010/070016
(87) Numéro de publication internationale: WO 2011/076670

(56) Documents cités:
- US-A- 6 084 540
- US-A1- 2003 043 086
- US-A1- 2006 105 701
- US-A1- 2008 181 174

## Description

La présente invention concerne un système et un procédé de formation d'un faisceau d'ondes à partir d'antennes mobiles les unes par rapport aux autres. Elle s'applique notamment au brouillage d'appareils radioélectriques terrestres.

Le brouillage nécessite de concentrer une grande énergie sur l'appareil ciblé afin de le perturber. Aussi, des émetteurs haute puissance et une antenne directive doivent généralement être employés, c'est à dire une antenne de grande dimension avec un équipement consommant une puissance électrique élevée et requérant parfois l'installation d'un groupe électrogène, donc un matériel coûteux et volumineux.

Lorsque l'on souhaite perturber des cibles à partir d'une plate-forme mobile, par exemple un véhicule automobile, les contraintes d'espace deviennent encore plus critiques. Notamment, l'espace disponible sur un véhicule ne permet généralement pas l'installation d'une antenne directive de grande dimension. A titre d'exemple, il faudrait une antenne directive émettrice en HF de plusieurs dizaines de mètres de longueur pour pouvoir brouiller un appareil avec une puissance de 1 kW.

La demande de brevet américain publiée sous le numéro US2003/043086 porte sur un système dans lequel une antenne est spécialement conçue pour recevoir des signaux GPS émis à partir d'une pluralité de satellites.

La demande de brevet américain publiée sous le numéro US 2006/0105701 divulgue un système de brouillage à partir d'un véhicule terrestre. Cependant, ce système requiert des antennes directives, dont des inconvénients ont été rappelés plus haut.

Un but de l'invention est de perturber une cible à distance à partir de moyens mobiles. A cet effet, l'invention a pour objet un procédé de formation électronique d'un faisceau d'ondes électromagnétiques à pointer sur un objet à partir de plusieurs antennes émettrices omnidirectionnelles, chaque antenne étant fixée sur une plate-forme, les plates-formes portant les antennes étant distantes et mobiles les unes par rapport aux autres, ledit procédé étant caractérisé en ce qu'il comprend au moins les étapes suivantes, répétées dans le temps :
■ au moins deux plates-formes déterminent leur position absolue par des moyens de localisation ;
■ déterminer les distances entre les plates-formes ;
■ déterminer les positions des plates-formes à partir des positions absolues et des distances déterminées précédemment ;
■ l'antenne de chaque plate-forme émet une onde électromagnétique dont la phase est choisie en fonction de la position de la plate-forme, de sorte que les ondes issues de chaque antenne arrivent en phase sur l'objet pointé.

L'étape de détermination des distances entre les plates-formes peut résulter d'une simple déduction des positions absolues, si ces positions absolues sont déterminées de manière suffisamment précise en regard de la longueur d'onde émise par les antennes. Si ces positions absolues sont peu précises (ce qui est souvent le cas lorsqu'un système de positionnement par satellite est utilisé), alors des moyens de détermination des distances autres peuvent être employés, par exemple par transmission de signaux entre les plates-formes et mesure du temps de vol de ces signaux.

Les moyens de détermination des distances entre les plates-formes permettent d'évaluer ces distances avec une précision suffisante en regard de la longueur d'onde pour que la phase de l'onde émise par chaque antenne puisse être déterminée de manière à ce que les ondes issues de chaque antenne arrivent en phase sur l'objet pointé.

Les antennes peuvent être configurées pour émettre simultanément des ondes aux mêmes fréquences. Avantageusement, une fréquence d'émission unique et commune pour toutes les antennes est choisie. Toutefois, cette fréquence d'émission unique peut être modifiée dans le temps.

Les étapes du procédé forment un cycle répété dans le temps pour s'adapter à l'évolution de la situation, due aux déplacements des plates-firmes. Selon une mise en oeuvre du procédé de formation électronique de faisceau d'ondes selon l'invention, les étapes du procédé sont répétées à une fréquence augmentant avec :
- la vitesse de déplacement des plates-formes ;
- la fréquence des ondes émises par les antennes omnidirectionnelles. En effet, lorsque les plates-formes se déplacent rapidement, les distances entre celles-ci sont susceptibles d'évoluer rapidement, de même que le déphasage à appliquer sur les ondes émises pour qu'un effet maximal soit obtenu sur l'objet pointé. En outre, si la fréquence d'émission est élevée, la précision requise dans le déphasage à appliquer aux ondes émises est élevée.

L'invention a également pour objet un système de formation électronique d'un faisceau formé à partir de plusieurs antennes émettrices omnidirectionnelles fixées sur des plates-formes distantes, lesdites plates-formes étant mobiles les unes par rapport aux autres, chaque plate-forme comportant des moyens de localisation, des moyens de détermination des distances entre les plates-formes, et un calculateur apte à calculer le déphasage à appliquer sur les ondes émises par l'antenne omnidirectionnelle en fonction des distances déterminées entre les plates-formes et des positions fournies par les moyens de localisation.

Selon un mode de réalisation du système selon l'invention, les moyens de détermination des distances entre les plates-formes comprennent des émetteurs/récepteurs radioélectriques pour former des liaisons de radiocommunications entre les plates-formes. Les radiocommunications entre les plates-formes peuvent, par exemple, être effectuées dans la bande UHF (Ultra Hautes Fréquences).

Les moyens de déterminations des distances entre les plates-formes pourraient également être des moyens optiques ou tout autre moyen adapté à une précision précise des distances, c'est-à-dire de l'ordre de quelques degrés de la phase des ondes émises par les antennes omnidirectionnelles.

Selon un mode de réalisation du système selon l'invention, les moyens de localisation de chaque plate-forme comprennent un récepteur de position par satellite. Ce type de récepteur, par exemple un récepteur GPS, permet de connaître la position absolue, à une précision néanmoins généralement médiocre, de l'ordre par exemple d'une dizaine de mètres horizontalement.

Avantageusement, la fréquence d'émission des antennes est dans la bande HF (Hautes Fréquences). Plus la fréquence d'émission des antennes est faible, moins la précision du déphasage à appliquer à chaque émission devient critique. Ainsi, le système est bien adapté à une utilisation pour des fréquences d'émission inférieures à 30 MHz.

Selon un mode de réalisation du système selon l'invention, les plates-formes mobiles sont des véhicules terrestres.

Le système de formation électronique de faisceau tel que décrit plus haut peut être utilisé pour brouiller une cible, le faisceau étant orienté vers la cible dont on souhaite perturber le fonctionnement.

Le système selon l'invention est avantageusement mis en oeuvre sur des véhicules terrestres, car ces véhicules ont généralement des dimensions assez réduites et ne peuvent pas accueillir aisément de grandes antennes émettrices. Néanmoins, le système selon l'invention peut également s'appliquer au domaine naval ou aérien.

Un avantage du système selon l'invention est qu'il peut fonctionner en mode dégradé, contrairement à un système n'employant qu'une seule plate-forme. En effet, par exemple, lorsque quatre plates-formes sont utilisées, la neutralisation ou la destruction de l'une de ces quatre plates-formes ne fait que réduire l'efficacité du système au lieu de le neutraliser totalement.

Un autre avantage du système selon l'invention est que des antennes omnidirectionnelles peuvent être employées pour émettre en direction de la cible, ce type d'antenne pouvant être installée aisément sur une plate-forme de taille réduite, contrairement à des antennes directives, beaucoup plus volumineuses.

La mobilité des plates-formes impose une bonne réactivité du système aux changements de position des antennes par rapport à la cible. Le système selon l'invention répond bien à cette contrainte en formant électroniquement le faisceau, évitant ainsi des rotations mécaniques permanentes de supports d'antennes qui sont traditionnellement installés avec des antennes directives.

D'autres caractéristiques apparaîtront à la lecture de la description détaillée donnée à titre d'exemple et non limitative qui suit faite en regard de dessins annexés qui représentent :
- la figure 1, un schéma illustrant l'utilisation d'un système selon l'invention ;
- la figure 2, un diagramme présentant un exemple de procédé selon l'invention ;
- la figure 3, un schéma illustrant l'ambiguïté dans la détermination des positions des plates-formes d'un système selon l'invention ;
- la figure 4, un schéma exposant l'architecture d'un système selon l'invention.

Par souci de clarté, des références identiques dans des figures différentes désignent les mêmes éléments.

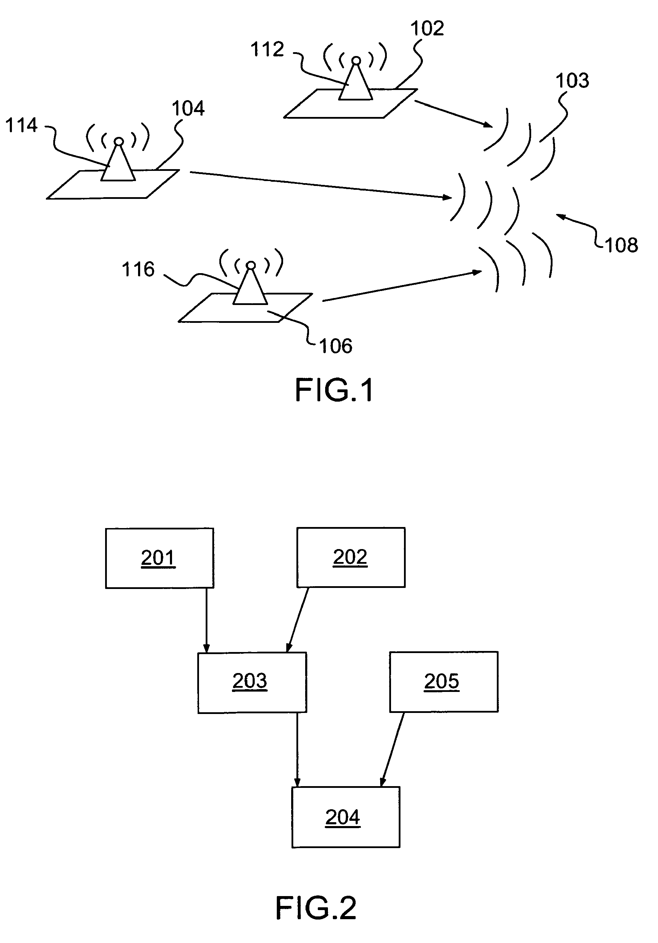

La figure 1 illustre, par un schéma, l'utilisation d'un système selon l'invention. Le système 101 comprend trois plates-formes mobiles 102, 104, 106, par exemple des véhicules automobiles. Les plates-formes 102, 104 sont, par exemple, éloignées de quelques dizaines de mètres l'une de l'autre, ou moins. Sur chacune des plates-formes mobiles 102, 104, 106, est installée un brouilleur pourvu d'une antenne omnidirectionnelle 112, 114, 116 émettant des ondes électromagnétiques 103. Les brouilleurs sont asservis de sorte que les ondes émises par chacun des brouilleurs forment un faisceau et arrivent en phase au niveau d'une cible 108, maximisant ainsi la puissance reçue par celle-ci. Un faisceau puissant peut ainsi être formé sur la cible 108 à partir des émissions omnidirectionnelles issues des multiples plates-formes mobiles 102, 104, 106.

La figure 2 est un diagramme présentant un exemple de procédé selon l'invention.

Dans un premier temps, une position absolue de chaque plate-forme est déterminée 201 grâce à des moyens de localisation. Parallèlement 202, les distances entre les plates-formes sont déterminées, la précision de ces distances étant meilleure que la précision des moyens de localisation, de sorte qu'une détermination à quelques degrés de phase près des ondes émises par les antennes peut être obtenue.

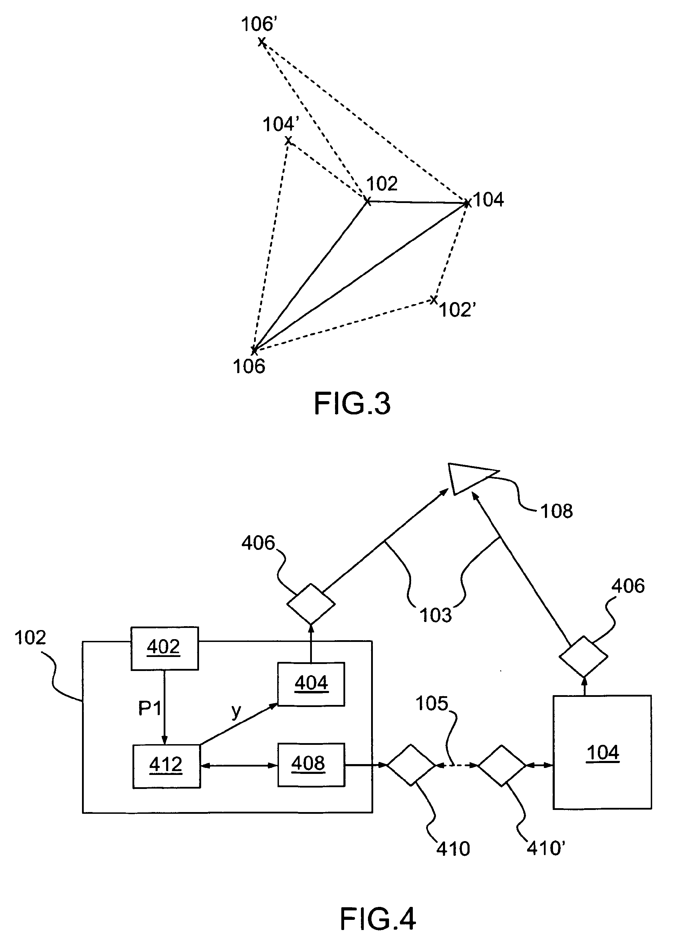

Ensuite 203, à partir des positions absolues approximatives et des distances précises entre les plates-formes déterminées précédemment, les positions relatives précises des plates-formes sont déterminées. Autrement dit, l'ambiguïté de position illustrée en figure 3 est levée et la position des plates-formes les unes par rapport aux autres est déterminée avec précision.

La figure 3 illustre l'ambiguïté dans la détermination des positions de trois plates-formes à partir de la seule connaissance des distances les séparant les unes des autres. En effet, outre la position réelle des plates-formes, représentée par un triangle à traits pleins dans la figure, les plates-formes pourraient prendre des positions alternatives tout en conservant les mêmes valeurs de distances, comme illustré par les triangles isométriques en pointillés. C'est pourquoi une connaissance, même approximative, de la position absolue des plates-formes, permet de lever l'ambiguïté de position en donnant une configuration approchée de la situation réelle.

Une fois que les positions relatives des plates-formes ont été déterminées, un déphasage est déterminé et appliqué 204 aux ondes de brouillage en fonction de la plate-forme d'émission. En effet, connaissant d'une part, la position 205 de la cible 108 grâce à des moyens de détections connus par ailleurs et d'autre part, la position de chaque plate-forme 102, 104, 106 par rapport aux autres plates-formes, un déphasage est appliqué pour chaque antenne, de sorte que les ondes émises par les différentes antennes arrivent en phase sur la cible 108.

Le procédé est répété dans le temps, à une fréquence suffisamment élevée pour que les déplacements des plates-formes et par conséquent les changements de positions de celles-ci ne provoquent pas une perte de puissance des ondes reçues au niveau de la cible.

La figure 4 expose l'architecture d'un système selon l'invention, apte à mettre en oeuvre le procédé selon l'invention. Le système est illustré dans la figure 4 avec deux plates-formes mobiles 102, 104 visant une cible 108.

Une première plate-forme mobile 102 comprend des moyens de localisation 402, un brouilleur 404 relié à une antenne émettrice 406, des moyens de communications 408, 410 avec les autres plates-formes 104, 106, et un calculateur 412. Les moyens de communications comportent des moyens d'émission/réception 410 de signaux radioélectriques et un module de traitement des données 408, lequel module 408 est, dans l'exemple une chaîne radio permettant de filtrer, démoduler, décoder des signaux reçus par les moyens d'émission/réception 410 ou à coder, moduler, et émettre des signaux via ces mêmes moyens d'émission/réception 410. Le calculateur 412 est connecté aux moyens de localisation 402, au brouilleur 404, et au module de traitement des données 408. Dans l'exemple, chaque plate-forme 102, 104 a la même architecture. Ainsi, une liaison de communication 105 peut être établie entre deux plates-formes 102, 104 par l'intermédiaire des moyens d'émission/réception 410, 410' de chaque plate-forme 102, 104.

L'antenne émettrice omnidirectionnelle 406 du brouilleur 404 émet par exemple dans la bande de fréquences HF et, dans le cas ou les communications entre les plates-formes 102, 104 sont effectuées par liaison radioélectrique 105, la bande de fréquences choisie pour effectuer ces communications est, de préférence, bien distincte de la bande de fréquence de brouillage. Par exemple, si l'antenne émettrice 406 de brouillage fonctionne en HF, les moyens de communications 408, 410 peuvent utiliser la bande UHF pour communiquer.

Le système de localisation 402 est, par exemple, un récepteur de position par satellite, tel qu'un récepteur GPS (« Global Positioning System »). Dans l'exemple, sa précision de localisation est donc de l'ordre de quelques mètres, par exemple de 10 mètres. Autrement dit, ce système de localisation 402 seul ne permet pas de déterminer les positions des plates-formes 102, 104, 106 de manière suffisamment précise pour pouvoir former un faisceau cohérent en HF. En effet, plus les longueurs d'ondes sont petites, plus la synchronisation des émetteurs doit être précise. De préférence, la fréquence d'émission des ondes vers la cible 108 est choisie de sorte que la longueur d'onde correspondante ne soit pas inférieure à deux fois la distance entre deux plates-formes mobiles.

Les plates-formes 102, 104 disposent également d'une référence temporelle commune. Par exemple, une horloge peut être installée sur chaque plate-forme et recalée dans le temps grâce au système de localisation 402, dans l'exemple l'horloge du GPS.

La première plate-forme 102 estime sa position approximative P1 grâce au système de localisation 402. Cette position P1 est transmise au calculateur 412.

Parallèlement, les moyens de communications 408, 410 reçoivent des signaux issus des autres plates-formes 104. Ces signaux sont utilisés pour synchroniser entre eux les moyens de communications 408, 410 des différentes plates-formes 102, 104. Ainsi, le calcul des distances entre les plates-formes peut être effectué par synchronisation des moyens de communications des différentes plates-formes. La synchronisation peut être effectuée à partir d'un signal de référence issu d'une première plate-forme 102 et d'un signal reçu à partir d'une autre plate-forme 104. Les références temporelles (horloges, par exemple) des plates-formes 102, 104 étant accordées, il est alors aisé de mesurer la différence de phase entre les signaux, et par conséquent la distance séparant les deux plates-formes. Selon un autre mode de réalisation du système selon l'invention, les mesures de distances peuvent être faites par radar anti collision, ou mesures infrarouges.

Les moyens de communications 408, 410 permettent, à la fois de déterminer la distance précise entre les plates-formes 102, 104, mais aussi de transmettre des informations entre les plates-formes, par exemple de transmettre la position P1 d'une plate-forme 102 vers une autre plate-forme 104, ou de transmettre la valeur de la fréquence utilisée pour brouiller.

Grâce aux moyens de communications 408, 410, chaque plate-forme 102, 104 peut connaître la position précise des autres plates-formes 102, 104 et ainsi ajuster la phase des ondes qu'elle émet par rapport à la phase des ondes émises à partir des autres plates-formes.

Parallèlement, la deuxième plate-forme 104 détermine sa position approximative P2 à l'aide de moyens analogues. Cette deuxième plate-forme 104 transmet un signal contenant la position P2 via ses moyens d'émission/réception 410' vers les moyens d'émission/réception 410 de la première plate-forme 102, lesquels transmettent ledit signal à la chaîne radio 408. La chaîne radio 408 décode le signal contenant la position P2 et transmet cette position P2 au calculateur 412.

Ensuite, le calculateur 412 détermine, à partir de la position P1 de la première plate-forme 102, de la position P2 de la deuxième plate-forme 104 et des instants auxquels ces positions P1 et P2 ont été mesurées, le déphasage Δϕ à appliquer au signal à émettre par la première plate-forme 102. Le calculateur 412 transmet le déphasage Δϕ calculé vers le brouilleur 404 qui applique ce déphasage sur les ondes de brouillage émises.

Le système de localisation 402 ne fournit qu'une estimation grossière de la position des plates-formes mobiles 102, 104 mais il permet de lever l'ambigüité de direction d'émission du brouillage, comme illustré plus haut en figure 3. De manière complémentaire, les moyens de communications 408, 410 seuls ne permettent pas de lever l'ambiguïté au-delà de la longueur d'onde de brouillage, mais ils permettent de déterminer précisément la distance entre les plates-formes. Le procédé selon l'invention associe le système de localisation 402 et les moyens de communications 408, 410 pour obtenir à la fois une position certaine des plates-formes et une estimation précise des distances entre les plates-formes mobiles, autrement dit pour obtenir les positions relatives précises entre les plates-formes.

## Revendications

1. Procédé de formation électronique d'un faisceau d'ondes électromagnétiques à pointer sur un objet (108) à partir de plusieurs antennes émettrices omnidirectionnelles (112, 114, 116), chaque antenne étant fixée sur une plate-forme (102, 104, 106), les plates-formes portant les antennes étant distantes et mobiles les unes par rapport aux autres, ledit procédé étant **caractérisé en ce qu'**il comprend au moins les étapes suivantes, répétées dans le temps :
■ au moins deux plates-formes (102, 104) déterminent (201) leur position absolue par des moyens de localisation (402) ;
■ déterminer (202) les distances entre les plates-formes (102, 104, 106);
■ déterminer (203) les positions des plates-formes à partir des positions absolues et des distances déterminées précédemment ;
■ l'antenne de chaque plate-forme (102, 104, 106) émet une onde électromagnétique dont la phase est choisie (204) en fonction de la position de la plate-forme, de sorte que les ondes issues de chaque antenne arrivent en phase sur l'objet pointé (108).

2. Procédé de formation électronique d'un faisceau d'ondes selon la revendication 1, **caractérisé en ce que** les antennes (112, 114, 116) sont configurées pour émettre simultanément des ondes aux mêmes fréquences.

3. Procédé de formation électronique d'un faisceau d'ondes selon la revendication 1 ou 2, **caractérisé en ce que** les étapes du procédé sont répétées à une fréquence augmentant avec :
• la vitesse de déplacement des plates-formes (102, 104) ;
• la fréquence des ondes émises par les antennes (112, 114, 116).

4. Système de formation électronique d'un faisceau formé à partir de plusieurs antennes émettrices omnidirectionnelles (112, 114, 116) fixées sur des plates-formes distantes (102, 104, 106), **caractérisé en ce que** lesdites plates-formes (102, 104, 106) sont mobiles les unes par rapport aux autres, chaque plate-forme comportant des moyens de localisation (402), des moyens de détermination des distances entre les plates-formes (408, 410), et un calculateur (412) apte à calculer le déphasage à appliquer sur les ondes émises par l'antenne omnidirectionnelle en fonction des distances déterminées entre les plates-formes et des positions fournies par les moyens de localisation (402).

5. Système de formation électronique de faisceau selon la revendication 4, les moyens de localisation (402) de chaque plate-forme (102, 104) comprenant un récepteur de position par satellite.

6. Système de formation électronique de faisceau selon la revendication 4 ou 5, **caractérisé en ce que** les moyens de détermination des distances entre les plates-formes (408, 410) comprennent des émetteurs/récepteurs radioélectriques pour former des liaisons de radiocommunications (105) entre les plates-formes (102, 104, 106)..

7. Système de formation de faisceau selon la revendication 6, dans lequel les radiocommunications (105) entre les plates-formes (102, 104, 106) sont effectuées dans la bande UHF.

8. Système de formation électronique de faisceau selon l'une des revendications 4 à 7, **caractérisé en ce que** la fréquence d'émission des antennes est dans la bande HF.

9. Système de formation électronique de faisceau selon l'une des revendications 4 à 8, **caractérisé en ce que** les plates-formes mobiles (102, 104, 106) sont des véhicules terrestres.

10. Utilisation du système de formation électronique de faisceau selon l'une des revendications 4 à 9 pour brouiller une cible, le faisceau étant orienté vers la cible dont on souhaite perturber le fonctionnement.

## Patentansprüche

1. Verfahren zum elektronischen Bilden eines auf ein Objekt (108) zeigenden Strahls von elektromagnetischen Wellen auf der Basis von mehreren omnidirektionalen Sendeantennen (112, 114, 116), wobei jede Antenne an einer Plattform (102, 104, 106) befestigt ist, wobei die die Antennen tragenden Plattformen voneinander entfernt und relativ zueinander beweglich sind, wobei das Verfahren **dadurch gekennzeichnet ist, dass** es wenigstens die folgenden über die Zeit wiederholten Schritte beinhaltet:
■ Ermitteln (201), durch wenigstens zwei Plattformen (102, 104), von deren absoluter Position durch Positionsbestimmungsmittel (402);
■ Ermitteln (202) der Abstände zwischen den Plattformen (102, 104, 106);
■ Ermitteln (203) der Positionen der Plattformen anhand der absoluten Positionen und der zuvor ermittelten Abstände;
■ Senden, durch die Antenne jeder Plattform (102, 104, 106), einer elektromagnetischen Welle, deren Phase in Abhängigkeit von der Position der Plattform gewählt (204) wird, so dass die von jeder Antenne ausgehenden Wellen phasengleich an dem Objekt (108) ankommen, auf das gezeigt wird.

2. Verfahren zur elektronischen Bildung eines Wellenstrahls nach Anspruch 1, **dadurch gekennzeichnet, dass** die Antennen (112, 114, 116) so konfiguriert sind, dass sie gleichzeitig Wellen mit denselben Frequenzen ausstrahlen.

3. Verfahren zur elektronischen Bildung eines Wellenstrahls nach Anspruch 1 oder 2, **dadurch gekennzeichnet, dass** die Schritte des Verfahrens mit einer Häufigkeit wiederholt werden, die zunimmt mit:
• der Bewegungsgeschwindigkeit der Plattformen (102, 104);
• der Frequenz der von den Antennen (112, 114, 116) ausgestrahlten Wellen.

4. System zur elektronischen Bildung eines Strahls, der von mehreren omnidirektionalen Sendeantennen (112, 114, 116) gebildet wird, die an den entfernten Plattformen (102, 104, 106) befestigt sind, **dadurch gekennzeichnet, dass** die Plattformen (102, 104, 106) relativ zueinander beweglich sind, wobei jede Plattform Folgendes umfasst: Positionsbestimmungsmittel (402), Mittel zum Ermitteln der Abstände zwischen den Plattformen (408, 410) und einen Rechner (412) zum Berechnen der auf die von der omnidirektionalen Antenne ausgestrahlten Wellen anzuwendenden Phasenverschiebung in Abhängigkeit von den ermittelten Abständen zwischen den Plattformen und den von dem Positionsbestimmungsmittel (402) gelieferten Positionen.

5. System zur elektronischen Strahlbildung nach Anspruch 4, wobei die Positionsbestimmungsmittel (402) jeder Plattform (102, 104) einen Positionsempfänger per Satellit umfassen.

6. System zur elektronischen Strahlbildung nach Anspruch 4 oder 5, **dadurch gekennzeichnet, dass** die Mittel zum Ermitteln der Abstände zwischen den Plattformen (408, 410) radioelektrische Sender/Empfänger zum Herstellen der Funkkommunikationsverbindungen (105) zwischen den Plattformen (102, 104, 106) umfassen.

7. System zur Strahlbildung nach Anspruch 6, bei dem die Funkkommunikation (105) zwischen den Plattformen (102, 104, 106) im UHF-Band erfolgen.

8. System zur elektronischen Strahlbildung nach einem der Ansprüche 4 bis 7, **dadurch gekennzeichnet, dass** die Sendefrequenz der Antennen im HF-Band ist.

9. System zur elektronischen Strahlbildung nach einem der Ansprüche 4 bis 8, **dadurch gekennzeichnet, dass** die beweglichen Plattformen (102, 104, 106) terrestrische Fahrzeuge sind.

10. Verwenden des Systems zur elektronischen Strahlbildung nach einem der Ansprüche 4 bis 9 zum Stören eines Ziels, wobei der Strahl auf das Ziel ausgerichtet ist, dessen Funktion gestört werden soll.

## Claims

1. Method for electronically shaping a bundle of electromagnetic waves to be targeted on an object (108) from a plurality of omnidirectional emitting antennae (112, 114, 116) each antenna being fixed to a platform (102, 104, 106), the platforms carrying the antennae being spaced apart and movable relative to each other, the method being **characterised in that** it comprises at least the following steps, repeated over time:
• at least two platforms (102, 104) determine (201) their absolute position by way of localisation means (402);
• determining (202) the distances between the platforms (102, 104, 106);
• determining (203) the positions of the platforms from the absolute positions and the distances determined previously;
• the antenna of each platform (102, 104, 106) emits an electromagnetic wave whose phase is selected (204) in accordance with the position of the platform so that the waves from each antenna arrive in phase at the targeted object (108).

2. Method for electronically shaping a bundle of waves according to claim 1, **characterised in that** the antennae (112, 114, 116) are configured to simultaneously emit waves at the same frequencies.

3. Method for electronically shaping a bundle of waves according to claim 1 or 2, **characterised in that** the steps of the method are repeated at a frequency which increases with:
• the movement speed of the platforms (102, 104);
• the frequency of the waves emitted by the antennae (112, 114, 116).

4. System for electronically shaping a beam shaped from a plurality of omnidirectional emitting antennae (112, 114, 116) which are fixed to spaced-apart platforms (102, 104, 106), **characterised in that** the platforms (102, 104, 106) can be moved relative to each other, each platform comprising localisation means (402), means for determining the distances between the platforms (408, 410) and a processor (412) which is capable of calculating the phase shift to be applied to the waves emitted by the omnidirectional antenna in accordance with the distances determined between the platforms and the positions provided by the localisation means (402)

5. System for electronically shaping a beam according to claim 4, the localisation means (402) of each platform (102, (104) comprising a satellite position receiver.

6. System for electronically shaping a beam according to claim 4 or claim 5, **characterised in that** the means for determining the distances between the platforms (408, 410) comprise radioelectrical transmitters/receivers in order to form radiocommunication connections (105) between the platforms (102, 104, 106).

7. System for shaping a beam according to claim 6, wherein the radiocommunications (105) between the platforms (102, 104, 106) are carried out in the UHF range.

8. System for electronically shaping a beam according to any one of claims 4 to 7, **characterised in that** the transmission frequency of the antennae is in the HF range.

9. System for electronically shaping a beam according to any one of claims 4 to 8, **characterised in that** the movable platforms (102, 104, 106) are terrestrial vehicles.

10. Use of the system for electronically shaping a beam according to any one of claims 4 to 9 for scrambling a target, the beam being orientated towards the target whose operation it is desirable to disrupt.
